# EUROPÄISCHE PATENTANMELDUNG

(11) **EP 0 802 679 A2**
(43) Veröffentlichungstag der Anmeldung: **22.10.1997**
(21) Anmeldenummer: 97201011.0
(22) Anmeldetag: 07.04.1997
(51) Int. Cl.: H04N 7/26, H04N 7/36

(54) **Verfahren zu Bildsegmentierung**

(30) Priorität: 19.04.1996 DE 19615492
(71) Anmelder: Philips Patentverwaltung GmbH, 22335 Hamburg (DE); PHILIPS ELECTRONICS N.V., 5621 BA Eindhoven (NL)
(72) Erfinder: Ibenthal, Achim, Röntgenstra e 24, 22335 Hamburg (DE); Siggelkow, Sven, Röntgenstra e 24, 22335 Hamburg (DE); Grigat, Rolf-Rainer, Prof.-Dr.-Ing., Röntgenstra e 24, 22335 Hamburg (DE)
(74) Vertreter: von Laue, Hanns-Ulrich, Dipl.-Ing.

(57) **Zusammenfassung**

Für ein Verfahren zur Segmentierung zeitlich aufeinanderfolgender Bilder eines Bildsignals, wobei innerhalb eines Bildes bei dessen Segmetierung eine Aufteilung des Bildes in Regionen vorgenommen wird, wobei zu einer Region benachbarte Bildpunkte gehören, welche ähnliche Helligkeits- und/oder Farbwerte aufweisen, ist zur zeitlichen Segmentweiterführung auch bewegter Regionen vorgesehen, daß in zeitlich aufeinanderfolgenden Bildern versucht wird, Regionen eines Bildes Iₙ in einem diesem nachfolgenden Bild Iₙ₊₁ dadurch wieder aufzufinden, daß eine Bewegungsschätzung der Regionen des Bildes Iₙ vorgenommen wird, daß anhand der für jede Region mittels der Bewegungschätzung ermittelten Bewegungsvektoren die neue Position der Region in dem Bild Iₙ₊₁ ermittelt wird. daß nachfolgend eine Anpassung der verschobenen Regionen an den Bildinhalt des Bildes Iₙ₊₁ vorgenommen wird und daß nicht von diesen angepaßten Regionen erfaßte Bildpunkte des Bildes Iₙ₊₁ einer dieser Regionen oder neu gebildeten Regionen zugeschlagen werden.

## Beschreibung

Die Erfindung betrifft ein Verfahren zur Segmentierung zeitlich aufeinanderfolgender Bilder eines Bildsignals, wobei innerhalb eines Bildes bei dessen Segmetierung eine Aufteilung des Bildes in Regionen vorgenommen wird, wobei zu einer Region benachbarte Bildpunkte gehören, welche ähnliche Helligkeits-und/oder Farbwerte aufweisen.

Aus "Robert M. Haralick, Linda G. Shapiro: Image Segmentation Techniques, Computer Vision, Graphics, and Image Processing, Vol. 29, Seiten 100 bis 132, 1985" ist ein Verfahren bekannt, bei dem eine Segmentierung innerhalb eines jeden Bildes eines Bildsignals vorgenommen wird. Die Segmentierung erfolgt in Art der Aufteilung eines jeden Bildes in Regionen, deren zugehörige Biidpunkte ähniiche Helligkeits- und/oder Farbwerte aufweisen. Bei diesem bekannten Verfahren wird eine Berücksichtigung ähnlicher Inhalte aufeinanderfolgender Bilder nicht vorgenommen.

Aus "Philippe Salembier, Luis Torres, Fernand Meyer, Chuang Gu: Region-based video coding using mathematical morphology", Proceedings of the IEE, Vol. 83, No. 6, pp-843-857, June 1995, ist ein anderes Verfahren bekannt, bei dem eine andere Segmentierungstechnik verwendet wird. Dort wird versucht, ähliche Bildinhalte aufeinanderfolgender Bilder zu nutzen. Dieses Verfahren versagt jedoch bei Bewegungen im Bildinhalt.

Es ist Aufgabe der Erfindung, daß eingangs genannte Verfahren dahingehend weiterzuentwickeln, daß Regionen in aufeinanderfolgenden Bildern auch bei vorliegender Bewegung wieder aufgefunden werden können und eine Übertragung der Segmentierung zwischen aufeinanderfolgenden Bildern möglich ist.

Diese Aufgabe ist erfindungsgemäß dadurch gelöst, daß in zeitlich aufeinanderfolgenden Bildern versucht wird, Regionen eines Bildes Iₙ in einem diesem nachfolgenden Bild Iₙ₊₁ dadurch wieder aufzufinden, daß eine Bewegungsschätzung der Regionen des Bildes Iₙ vorgenommen wird, daß anhand der für jede Region mittels der Bewegungschätzung ermittelten Bewegungsvektoren die neue Position der Region in dem Bild Iₙ₊₁ ermittelt wird, daß nachfolgend eine Anpassung der verschobenen Regionen an den Bildinhalt des Bildes Iₙ₊₁ vorgenommen wird und daß nicht von diesen angepaßten Regionen erfaßte Bildpunkte des Bildes Iₙ₊₁ einer dieser Regionen oder neu gebildeten Regionen zugeschlagen werden.

In einem Bild Iₙ vorliegende Regionen, werden einem der an sich bekannten Verfahren zur Bewegungsschätzung unterzogen. Auf diese Weise werden Bewegungsvektoren ermittelt, mittels derer die relative Verschiebung einer Region in dem Bild Iₙ₊₁ relativ zu der Position der Region in dem Bild Iₙ ermittelt werden kann. Damit ist die Position der Region in dem Bild Iₙ₊₁ bekannt. Diese Region wird nachfolgend in dem Bild Iₙ₊₁ weiterverfolgt, d.h. sie wird als verschobene Region behandelt. Damit können die für die Region in dem Bild In gebildeten Werte und auch die Größe und Form der Region übernommen werden. In dem Bild Iₙ₊₁ gehören jedoch aufgrund der Verschiebung der Region andere Bildpunkte zu der Region als in dem Bild Iₙ. Damit wird der Vorteil erreicht, daß die Region in dem Bild Iₙ₊₁ nicht neu gebildet werden muß, so daß Rechenaufwand und damit Zeit bei der Codierung erspart wird.

Dieses Verfahren kann grundsätzlich für alle Regionen eines Bildes Iₙ eingesetzt werden. In der Praxis wird ein großer Teil der Regionen eines Bildes Iₙ in dem Bild Iₙ₊₁ wieder aufgefunden werden.

Aufgrund einer vorliegenden Bewegung können durch Aufdeckung oder einen Kameraschwenk neue Bildinhalte entstehen. Diese neuen Bildinhalte werden einer der Regionen, die ggf. aus dem Vorbild übernommen worden, zugeschlagen. Gegebenenfalls kann auch für diese nicht erfaßten Bildpunkte eine Bildung neuer Regionen vorgenommen werden.

Ein Bild einer Bildfolge kann also bei seiner Segmentierung aus dem Vorbild übernommene, ggf. verschobene, Regionen aufweisen. Es kann aber auch neu gebildete oder erweiterte, alte Regionen aufweisen. Für jede Region, die aus dem Vorbild, ggf. in verschobener Position, übernommen werden kann, tritt eine Reduzierung des Rechenaufwandes ein. Zudem sind solche Regionen durch Prädiktion leichter codierbar.

Für eine Ausgestaltung der Erfindung ist vorgesehen, daß in dem Fall, in dem mehrere Bildpunkte des Bildes Iₙ aufgrund der Bewegung ihrer Regionen auf einen Bildpunkt im Bild Iₙ₊₁ abgebildet werden, für jeden dieser Bildpunkte ermittelt wird, zu welcher der bewegten Regionen er im Bild Iₙ₊₁ aufgrund seiner Helligkeits-und/oder Farbwerte am besten paßt.

Gegebenenfalls können aufgrund unterschiedlicher vorliegender Bewegungen zwei Regionen eines Bildes Iₙ auf einen gemeinsamen Bereich oder Teilbereich eines Bildes Iₙ₊₁ abgebildet werden, Es entsteht dann quasi eine Überdeckung der beiden Regionen in dem Bild Iₙ₊₁. Da derartiges nicht zulässig ist, muß für jeden der Bildpunkte, die in dem sich überdeckenden Bereich beider Regionen liegen, entschieden werden, zu welcher der bewegten Regionen er im Bild Iₙ₊₁ aufgrund seiner Helligkeits- und/oder Farbwerte am besten paßt. Es wird also in dem sich überdeckenden Bereich eine Entscheidung dahingehend vorgenommen, zu welcher der Regionen jeder Bildpunkt am besten paßt.

Für eine weitere Ausgestaltung des erfindungsgemäßen Verfahrens ist vorgesehen, daß die ermittelten Bewegungsvektoren für die Bilder In und Iₙ₊₁ mit zusätzlich ermittelten Bewegungsvektoren für die Bilder Iₙ₋₁ und Iₙ verglichen werden und daß, sollten für eine Region bei beiden Bewegungsschätzungen deutlich abweichende Bewegungsvektoren ermittelt worden sein, die Bewegungsvektoren für diese Region als ungültig angesehen werden und die Bildpunkte dieser Region einer der anderen verschobenen Regionen oder neu gebildeten Regionen zugeschlagen werden.

Die oben beschriebene Bewegungsschätzung zwischen den Bildern Iₙ und Iₙ₊₁ kann zusätzlich für die Bilder Iₙ₋₁ und Iₙ vorteilhaft vorgenommen werden. Damit kann abgeschätzt werden, wie konsistent eine Bewegung ist. Sollten sich für beide Bewegungsschätzungen deutlich abweichende Bewegungsvektoren ergeben, so ist dies ein Indiz dafür, daß eine Bewegungsschätzung möglicherweise falsche Werte geliefert hat. Dies kann beispielsweise aufgrund ähnlicher Bildinhalte geschehen. Weisen daher beide Bewegungsschätzungen abweichende Bewegungsvektoren auf, so werden die Regionen im Bild Iₙ₊₁ neu gebildet, d.h. es werden die Regionen des Bildes Iₙ₊₁, für die aufgrund der Bewegungsschätzung eine Bewegung ermittelt worden ist, aufgegeben.

Gemäß einer weiteren Ausgestaltung der Erfindung ist vorgesehen, daß für jeden Bildpunkt, der an einer Grenze seiner Region angeordnet ist, überprüft wird, ob er aufgrund seiner Helligkeits- und/oder Farbwerte denen einer Region ähnlicher ist, zu der sein linker, rechter, oberer oder unterer Nachbar gehört, und daß der Bildpunkt ggf. einer gefundenen besser passenden Region zugeschlagen wird.

Bei einer derartigen Nachbearbeitung wird für die Bildpunkte, vorzugsweise der verschobenen Regionen, eine Nachbearbeitung in der Weise vorgenommen, daß für jeden benachbarten Bildpunkt, der links, rechts, ober oder unter dem betreffenden Bildpunkt angeordnet ist, eine Ähnlichkeit mit dem betreffenden Bildpunkt überprüft wird. Wird ggf. eine größere Ähnlichkeit zu einem Bildpunkt einer anderen Region festgestellt, so wird der Bildpunkt dieser Region zugeschlagen. Es findet damit eine Anpassung der Regionengrenzen statt.

Gemäß einer weiteren Ausgestaltung der Erfindung ist vorgesehen, daß für in dem Bild Iₙ₊₁ neu gebildete Regionen eine Verschmelzung von Regionen mit ähnlichen Helligkeits- und/oder Farbwerten vorgenommen wird.

Für in dem Bild Iₙ₊₁ neu gebildete Regionen wird eine Verschmelzung von Regionen mit ähnlichen Helligkeits- und/oder Farbwerten vorgenommen. Dies gilt jedoch nur für in dem Bild neu gebildete Regionen, nicht für übernommene, ggf. verschobene Regionen.

Gemäß einer'weiteren Ausgestaltung der Erfindung ist vorgesehen, daß Regionen, die eine vorgegebene Mindestgröße unterschreiten, aufgelöst werden und daß deren Bildpunkte anderen möglichst gut passenden Regionen zugeschlagen werden.

Regionen, die eine vorgegebene Mindestgröße unterschreiten, bieten bei der Codierung keine nennenswerten Vorteile. Sie werden daher vorteilhafterweise aufgelöst. Die Bildpunkte der aufgelösten der aufgelösten Region werden anderen, möglichst gut passenden Regionen zugeschlagen.

Dabei ist die Mindestgröße, die Regionen aufweisen müssen, damit sie nicht aufgelöst werden, wie gemäß einer weiteren Ausgestaltung der Erfindung vorgesehen ist, für in dem Bild Iₙ₊₁ neu gebildetet Regionen größer als für aus dem Bild Iₙ übernommene, verschobene Regionen. Für aus dem Bild Iₙ übernommene Regionen besteht bereits eine Konsistenz dieser Regionen, so daß diese nur dann aufgelöst werden sollten, wenn sie sehr klein sind. Für in dem Bild Iₙ₊₁ neu gebildete Regionen wird die Mindestgröße größer angesetzt, da diese Regionen neu codiert werden müssen, d.h. nicht prädiktiv codiert werden können.

Gemäß einer weiteren Ausgestaltung der Erfindung ist vorgesehen, daß daß jede Region in dem Bild Iₙ₊₁, die durch Verschiebung aus einer Region des Bildes Iₙ hervorgegangen ist, mit ihren Nachbarn des Bildes Iₙ verglichen wird und daß Regionen mit gleichen oder ähnlichen Regionen des Bildes Iₙ zusammengefaßt werden.

Bei der Bewegungsschätzung kann ggf. der Fall eintreten, daß eine Region zunächst in zwei Regionen aufgetrennt wurde, beispielsweise weil sich ein Gegenstand vor die Region schiebt. Diese Regionen würden dann als zwei Regionen weiterbhandelt werden. Um dies zu vermeiden, werden die Regionen in dem Bild Iₙ₊₁, die durch eine Verschiebung aus Regionen des Bildes Iₙ hervorgegangen sind, mit ihren Nachbarn verglichen. Regionen, die die gleiche Vorgängerregion im Bild Iₙ haben, werden zusammengefaßt. Damit wird eine Region, die beispielsweise durch die oben angegebenen Umstände getrennt wurde, wieder zusammengeführt.

Gemäß einer weiteren Ausgestaltung der Erfindung ist vorgesehen, daß vor der Bildung neuer Regionen in dem Bild Iₙ₊₁ eine Kantendetektion anhand der Bildpunktwerte, die keiner gegenüber dem Bild Iₙ verschobenen Region angehören, vorgenommen wird und daß Bildpunkte, die eine Kante bilden, nach Bildung der neuen Regionen derjenigen neuen Region zugeschlagen werden, zu der sie aufgrund Ihrer Helligkeits- und/oder Farbwerte am besten passen.

Für diejenigen Regionen, die in dem Bild Iₙ₊₁ nicht durch die Bewegungsschätzung aus dem Bild Iₙ übernommen werden konnten, und die daher neu gebildet wurden, kann zusätzlich eine Kantendetektion vorgenommen werden. Eine Kantendetektion liefert lokal sehr gute Ergebnisse für die Trennung verschiedener Bildbereiche. Nach der Bildung der neuen Regionen kann die Kantendetektion ggf. dazu herangezogen werden, diejenigen Bildpunkte, die zu einer Kante gehören, einer der benachbarten Regionen zuzuschlagen. Dabei wird diejenige Region gewählt, die aufgrund ihrer Helligkeits- und/oder Farbwerte am besten zu den Bildpunkten der Kante paßt.

Gemäß einer weiteren Ausgestaltung der Erfindung ist vorgesehen, daß eine Szenenwechselerkennung in der Weise vorgenommen wird, daß bei stark abweichendem Bildinhalt des Bildes Iₙ₊₁ vom Bild Iₙ keine Bewegungsschätzung vorgenommen wird und auschließlich neue Regionen gebildet werden.

Gegebenenfalls kann beispielsweise zwischen Bildern Iₙ und Iₙ₊₁ einer Bildfolge eine Umschaltung der Szene, ein Kamerawechsel oder Ähnliches, stattfinden. Dann sind die Bildinhalte dieser beiden Bilder so verschieden, daß in dem Bild Iₙ aufgefundene Regionen in dem Bild Iₙ₊₁ ohnehin nicht wiedergefunden werden können. Es kann daher vorteilhaft eine Szenenwechselerkennung vorgesehen sein, welche stark differierende Bildinhalte zweier aufeinanderfolgender Bilder detektiert. Wird mittels dieser Szenenwechselerkennung ein stark abweichender Bildinhalt der Bilder festgestellt, so wird keine Bewegungsschätzung vorgenommen und es werden ausschließlich neue Regionen in dem Bild Iₙ₊₁ gebildet.

Die Erfindung wird nachfolgend anhand der Zeichnung näher erläutert. Es zeigen:
Fig. 1 eine Schablone für die Bildung von Regionen innerhalb eines Bildes,
Fig. 2 eine schematische Darstellung zweier aufeinanderfolgender Bilder mit einer verschobenen Region,
Fig. 3 eine schematische Darstellung einer überlappenden Abbildung der Segmentierung eines Bildes Iₙ auf ein Bild Iₙ₊₁ und
Fig. 4 eine schematische Darstellung einer Schaltungsanordnung zur Durchführung des erfindungsgemäßen Verfahrens.

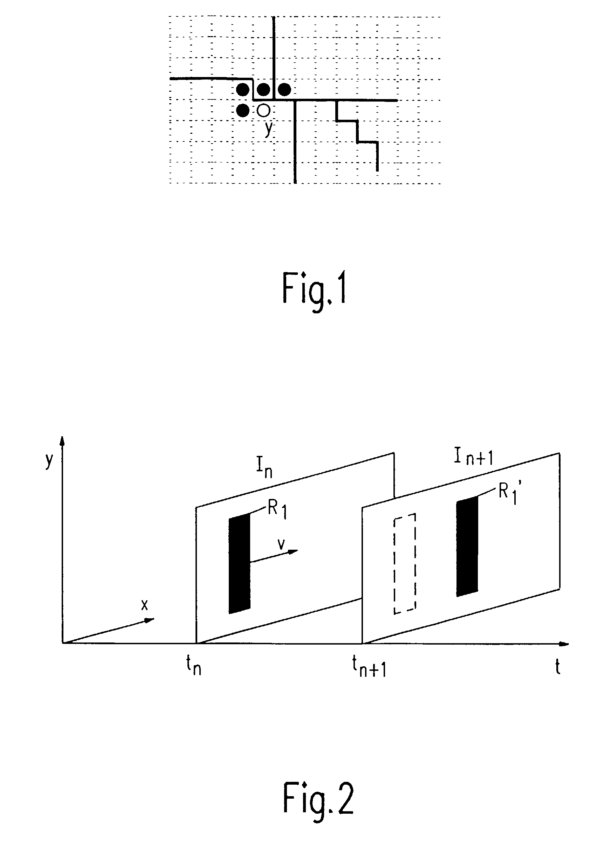

In Fig. 1 ist schematisch eine Schablone dargestellt. welche in einem Bild, in dem noch keine Regionen gebildet wurden, oder in Bildbereichen, in denen keine verschobene Region gefunden wurde, eine neue Region zu bilden. Dazu wird für einen in der Fig. 1 schematisch dargestellten Bildpunkt y überprüft, inwieweit er ähnliche Bildpunktwerte zu den in der Fig. 1 als schwarze Punkte dargestellten benachbarten Bildpunkten aufweist.

Die in Fig. 1 dargestellten Trennlinien deuten die Segmentierung an, die sich aufgrund der vorliegenden Helligkeits- und/oder Farbwerte ergeben sollte. Die gestrichelten Linien deuten das Bildpunktraster an. Der Punkt y würde in dem in Fig. 1 dargestellten Beispiel also der linken unteren Region zugeschlagen werden.

Für den Punkt y wird ggf. eine benachbarte Region gefunden, zu der dieser Bildpunktwert bezüglich seiner Helligkeits- und/oder Farbwerte am besten paßt, d.h. zu der er die größte Ähnlichkeit aufweist. Auf diese Weise werden zeilenweise alle Bildpunkte eines Bildes erfaßt, so daß innerhalb eines Bildes Regionen gebildet werden, zu denen benachbarte Bildpunkte mit ähnlichen Helligkeits- und/oder Farbwerten gehören.

In nach dem Stande der Technik bekannten Verfahren wird eine derartige Regionenbildung in jedem Bild einzeln vorgenommen. Gegebenenfalls kann auch versucht werden. eine gebildete Region in einem nachfolgenden Bild wiederzufinden. Erfindungsgemäß wird dieses Wiederauffinden einer Region aus dem Bild Iₙ in einem Bild Iₙ₊₁ dadurch verbessert, daß eine Bewegungsschätzung der Regionen vorgenommen wird. Dies wird nachfolgend anhand der schematischen Darstellung in Fig. 2 näher erläutert.

Die schematische Darstellung in Fig. 2 zeigt zwei aufeinanderfolgende Bilder einer Bildfolge. Ein Bild In wurde zu einem Zeitpunkt tₙ übertragen. In dem Bild In wurde eine in der Figur dunkel dargestellte Region R₁ gefunden. Es können selbstverständlich in dem Bild Iₙ weitere Regionen gefunden worden sein: der Übersichtlichkeit halber wird hier jedoch nur die Region R₁ betrachtet.

Zu einem Zeitpunkt tₙ₊₁ wurde das Bild Iₙ₊₁ übertragen. Zwischen diesen beiden Bildern einer Bildfolge liegt eine Bewegung von wenigstens Teilen des Bildinhaltes vor. Daher wird die Region R₁ des Bildes Iₙ in dem Bild Iₙ₊₁ nicht an der erwarteten, gleichen Position erscheinen. Statt dessen erscheint die Region aufgrund vorliegender Bewegung des Bildinhaltes als Region R₁. an einer verschobenen Position.

Dadurch, daß erfindungsgemäß ein Verfahren zur Bewegungsschätzung eingesetzt wird, wird diese neue Position in dem Bild Iₙ₊₁ aufgefunden. Es wird ein Bewegungsvektor v ermittelt, der die relative Verschiebung der Position R₁ in dem Bild Iₙ₊₁ zu der Region R₁ in dem Bild Iₙ ermittelt. Aufgrund dieser Bewegungsschätzung und daß durch sie ermittelten Bewegungsvektors ist damit die neue Position der Region R₁, in dem Bild Iₙ₊₁ bekannt. Es können damit die Werte für diese Region übernommen werden. Dies gilt sowohl bezüglich der Helligkeitsund/oder Farbwerte wie auch bezüglich der Größe, Form und Ausdehnung der Regionen.

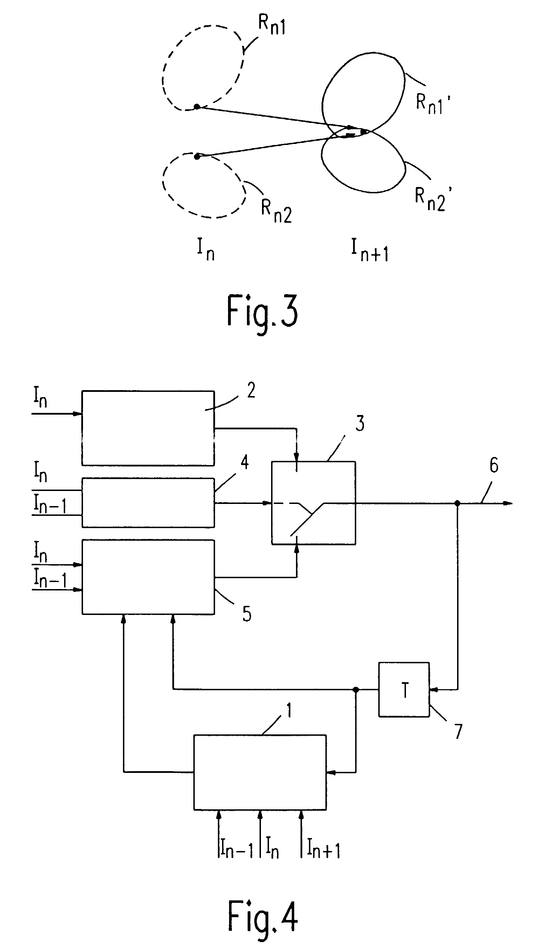

In Fig. 3 ist schematisch ein Sonderfall dargestellt, bei dem Regionen Rₙ₁ und Rₙ₂ eines Bilds Iₙ verschiedenen Bewegungen unterzogen sind. Dies führt entsprechend der schematischen Darstellung in Fig. 3 in dem nachfolgenden Bild Iₙ₊₁ dazu, daß die Regionen sich teilweise überlappen. Die nunmehr in dem Bild Iₙ₊₁ verschobenen Regionen Rₙ₁, und Rₙ₂, weisen gemeinsame Bildpunkte auf. Dies ist in der Fig. 3 durch die Darstellung eines schwarzen Punktes angedeutet.

Da derartige sich überlappende Regionen nicht zulässig sind, wird erfindungsgemäß für diejenigen Bildpunkte, die an sich beiden Regionen Rₙ₁, und Rₙ₂, zugehören würden, eine Überprüfung dahingehend vorgenommen, zu welcher der beiden Regionen die Bildpunkte aufgrund ihrer Helligkeits- und/oder Farbwerte am besten passen, d.h. zu welcher Region sie die ähnlichsten Werte aufweisen.

Damit werden diese Regionen in zusammenhängenden Bereichen einer der Regionen R_{n1'} oder R_{n2'}, zugeschlagen. Damit ist der sich überdeckende Bereich der Regionen aufgelöst.

In Fig. 4 ist in schematischer Form ein Blockschaltbild einer Schaltungsanordnung dargestellt, mittels derer das erfindungsgemäße Verfahren zur Segmentierung von Bildern in Bildfolgen vorgenommen werden kann.

Die Darstellung gemäß Fig. 4 zeigt einen Schaltungsblock 1 zur Bewegungsschätzung. Diesem Schaltungsblock werden die Daten dreier aufeinanderfolgender Bilder Iₙ₋₁, Iₙ und Iₙ₊₁ zugeführt.

Fig. 4 zeigt ferner einen Schaltungsblock 2 zur Segmentierung. Diesem Schaltungsblock werden die Daten des Bildes Iₙ zugeführt. Das Ausgangssignal des Schaltungsblockes 2 gelangt auf einen Umschalter 3. Es ist ferner ein Schaltungsblock 4 zur Szenenwechselerkennung vorgesehen. Dem Schaltungsblock werden die Daten der Bilder Iₙ und Iₙ₋₁ zugeführt, in denen die Schaltung des Blockes 4 eine Szenenwechselerkennung in der Weise durchgeführt, daß für diese beiden aufeinanderfolgenden Bilder ggf. ein stark abweichender Bildinhalt festgestellt wird. Mittels des Ausgangssignales des Schaltungsblockes 4 zur Szenenwechselerkennung wird der Umschalter 3 angesteuert.

In der Schaltungsanordnung gemäß Fig. 4 ist ferner ein Schaltungsblock 5 zur zeitlichen Segmentweiterführung vorgesehen. Dem Schaltungsblock 5 werden eingangsseitig die Daten der Bilder Iₙ und Iₙ₋₁ zugeführt. Das Ausgangssignal gelangt auf den Schalter 3.

Der mittels des Ausgangssignales des Schaltungsblockes 4 zur Szenenwechselerkennung angesteuerte Schalter kann auf das Ausgangssignal des Schaltungsblockes 2 zur Segmentierung oder des Schaltungsblockes 5 zur zeitlichen Segmentweiterführung umgeschaltet werden. In Abhängigkeit dieser Umschaltung gelangt eines der beiden Ausgangssignale des Blockes 2 oder des Blockes 5 auf einen Ausgang 6 der Schaltungsanordnung. Dieses Ausgangssignal des Schalters 3 gelangt zusätzlich auf eine Verzögerungsstufe 7, deren Ausgangssignal sowohl dem Schaltungsblock 5 zur zeitlichen Segmentweiterführung wie auch dem Schaltungsblock 1 zur Bewegungsschätzung zugeführt wird. Das Ausgangssignal des Schaltungsblockes 1 gelangt darüber hinaus an den Schaltungsblock 5 zur zeitlichen Segmentweiterführung.

Der Schaltungsblock 4 zur Szenenwechselerkennung zeigt an, ob für aufeinanderfolgende Bilder grundsätzlich ähnlicher Bildinhalt vorhanden ist oder nicht. Sollte ähnlicher Bildinhalt vorhanden sein, kann mittels der Bewegungsschätzung eine Weiterverfolgung ggf. auch bewegter Regionen zwischen aufeinanderfolgenden Bildern vorgenommen werden. Weicht der Bildinhalt aufeinanderfolgender Bilder Iₙ und Iₙ₋₁ jedoch stark voneinander ab, so liegt mit großer Wahrscheinlichkeit ein Szenenwechsel vor. Es muß dann das Bild Iₙ vollständig neu segmentiert werden, d.h. es werden neue Regionen gebildet.

Dieses wird mittels des Schaltungsblockes 2 zur Segmentierung vorgenommen.

In Abhängigkeit des Ergebnisses der Szenenwechselerkennung wird ggf. der Schalter 3 auf das Ausgangssignal des Schaltungsblockes 2 zur Segmentierung umgeschaltet. Dieses Ausgangssignal gelangt auf den Ausgang 6, so daß für das Bild Iₙ am Ausgang 6 die Segmentierung, d.h. die Regionen vorliegen.

Wird für das folgende Bild Iₙ₊₁ davon ausgegangen, daß es dem Bildinhalt In in der Weise ähnlich ist, daß Regionen wieder aufgefunden werden können, die in dem Bild Iₙ₊₁ gegenüber dem Bild Iₙ eine verschobene Position aufweisen, so wird eine Umschaltung des Schalters 3 auf das Ausgangssignal des Blockes 5 zur zeitlichen Segmentweiterführung vorgenommen.

Die in dem Signal des Ausganges 6 vorliegende Regioneneinteilung gelangt nach Verzögerung mittels der Verzögerungsstufe 7 an den Schaltungsblock 1 zur Bewegungsschätzung. Mittels dieses Schaltungsblockes 1 wird eine Ermittlung von Bewegung der in dem Bild In aufgefundenen Regionen relativ zu dem Bild Iₙ₊₁ vorgenommen. Auf diese Weise wird in dem Bild Iₙ₊₁ die neue Position von solchen Regionen aufgefunden, die gegenüber dem Bild Iₙ lediglich verschoben sind. Zur Konsistenz dieser Bewegungsschätzung kann ein Vergleich der ermittelten Bewegung mit der Bewegung der gleichen Regionen zwischen den Bildern Iₙ₋₁ und Iₙ vorgenommen werden. Nur wenn zwischen diesen drei Bildern eine konsistente Bewegung vorliegt, wird die Bewegungsschätzung als gültig angesehen.

Sowohl das Ausgangssignal des Schaltungsblockes 1 zur Bewegungsschätzung wie auch die mittels der Verzögerungsstufe 7 verzögerten Regionendaten für das Bild In gelangen an den Schaltungsblock 5 zur zeitlichen Segmentweiterführung. Mittels des Schaltungsblockes 5 können in dem Bild Iₙ₊₁ an unveränderter Position befindliche Regionen und die mittels des Schaltungsblockes 1 aufgefundenen Regionen mit verschobener Position weitergeführt werden. Das heißt diese Regionen werden vom Schaltungsblock 5 für das Bild Iₙ₊₁ übernommen. Gegebenenfalls können mittels des Schaltungsblockes 5 diejenigen Bildbereiche, die von den verschobenen Regionen nicht erfaßt werden, bzw. diejenigen Bildbereiche. die einer Region in dem Bild In angehörten, die in dem Bild Iₙ₊₁ nicht aufgefunden wurde, die also verlorengegangen ist, neuen Regionen zugeschlagen werden. Es können dafür neue Regionen gebildet werden oder die Bildpunkte können bereits existierenden Regionen zugeschlagen werden.

Ferner kann in dem Schaltungsblock 5 für alle Regionen, insbesondere aber für neu gebildete Regionen, deren Konsistenz überprüft werden. Das heißt es kann überprüft werden, ob ggf. benachbarte Regionen vereinigt werden, ob bestimmte Bildpunkte einer der bekannten Regionen zugeschlagen werden können, ob zu kleine Regionen aufgelöst werden etc..

Die Daten der übernommenen Regionen und ggf. auch die Daten der neu gebildeten Regionen gelangen über den Schalter 3 für das Bild Iₙ₊₁ als Ausgangssignal auf den Ausgang 6 der Schaltungsanordnung. Damit ist jedenfalls für wesentliche Teile des Bildinhaltes, die ggf. auch eine Bewegung unterliegen dürfen, eine Übernahme der Regionen aus dem Bild Iₙ möglich.

Dieser Vorgang wiederholt sich beispielsweise für das Bild Iₙ₊₂ in ähnlicher Weise.

Erst dann, wenn der Schaltungsblock 4 zur Szenenwechselerkennung, in aufeinanderfolgenden Bildern stark abweichenden Bildinhalt feststellt, wird der Schalter 3 wieder in seine Position überführt, in der er auf das Ausgangssignal des Schaltungsblockes 2 zur neuen Segmentierung umgeschaltet ist. Es wird dann für dieses Bild eine neue Segmentierung vorgenommen. Wird für das nachfolgende Bild kein Szenenwechsel detektiert, so wird der Schalter wieder auf das Ausgangssignal des Schaltungsblockes 5 zur zeitlichen Segmentweiterführung umgeschaltet und es wird für das nachfolgende Bild bzw. für weitere Bilder eine zeitliche Weiterführung von Regionen in aufeinanderfolgenden Bildern durchgeführt.

## Patentansprüche

1. Verfahren zur Segmentierung zeitlich aufeinanderfolgender Bilder eines Bildsignals, wobei innerhalb eines Bildes bei dessen Segmetierung eine Aufteilung des Bildes in Regionen vorgenommen wird, wobei zu einer Region benachbarte Bildpunkte gehören, welche ähnliche Helligkeits- und/oder Farbwerte aufweisen,
dadurch gekennzeichnet,
daß in zeitlich aufeinanderfolgenden Bildern versucht wird, Regionen eines Bildes In in einem diesem nachfolgenden Bild Iₙ₊₁ dadurch wieder aufzufinden, daß eine Bewegungsschätzung der Regionen des Bildes In vorgenommen wird, daß anhand der für jede Region mittels der Bewegungschätzung ermittelten Bewegungsvektoren die neue Position der Region in dem Bild Iₙ₊₁ ermittelt wird, daß nachfolgend eine Anpassung der verschobenen Regionen an den Bildinhalt des Bildes Iₙ₊₁ vorgenommen wird und daß nicht von diesen angepaßten Regionen erfaßte Bildpunkte des Bildes Iₙ₊₁ einer dieser Regionen oder neu gebildeten Regionen zugeschlagen werden.

2. Verfahren nach Anspruch 1, dadurch gekennzeichnet,
daß in dem Fall, in dem mehrere Bildpunkte des Bildes In aufgrund der Bewegung ihrer Regionen auf einen Bildpunkt im Bild Iₙ₊₁ abgebildet werden, für jeden dieser Bildpunkte ermittelt wird, zu welcher der bewegten Regionen er im Bild Iₙ₊₁ aufgrund seiner Helligkeits- und/oder Farbwerte am besten paßt.

3. Verfahren nach Anspruch 1 oder 2, dadurch gekennzeichnet,
daß die ermittelten Bewegungsvektoren für die Bilder Iₙ und Iₙ₋₁ mit zusätzlich ermittelten Bewegungsvektoren für die Bilder Iₙ₋₁ und Iₙ verglichen werden und daß, sollten für eine Region bei beiden Bewegungsschätzungen deutlich abweichende Bewegungsvektoren ermittelt worden sein, die Bewegungsvektoren für diese Region als ungültig angesehen werden und die Bildpunkte dieser Region einer der anderen verschobenen Regionen oder neu gebildeten Regionen zugeschlagen werden.

4. Verfahren nach einem der Ansprüche 1 bis 3, dadurch gekennzeichnet,
daß für jeden Bildpunkt, der an einer Grenze seiner Region angeordnet ist, überprüft wird, ob er aufgrund seiner Helligkeits- und/oder Farbwerte denen einer Region ähnlicher ist, zu der sein linker, rechter, oberer oder unterer Nachbar gehört, und daß der Bildpunkt ggf. einer gefundenen besser passenden Region zugeschlagen wird.

5. Verfahren nach einem der Ansprüche 1 bis 4, dadurch gekennzeichnet,
daß für in dem Bild Iₙ₊₁ neu gebildete Regionen eine Verschmelzung von Regionen mit ähnlichen Helligkeits- und/oder Farbwerten vorgenommen wird.

6. Verfahren nach einem der Ansprüche 1 bis 5, dadurch gekennzeichnet,
daß Regionen, die eine vorgegebene Mindestgröße unterschreiten, aufgelöst werden und daß deren Bildpunkte anderen möglichst gut passenden Regionen zugeschlagen werden.

7. Verfahren nach Anspruch 6, dadurch gekennzeichnet,
daß die Mindestgröße für in dem Bild Iₙ₊₁ neu gebildetet Regionen größer ist als für aus dem Bild In übernommene, verschobene Regionen.

8. Verfahren nach einem der Ansprüche 1 bis 7, dadurch gekennzeichnet,
daß jede Region in dem Bild Iₙ₊₁, die durch Verschiebung aus einer Region des Bildes In hervorgegangen ist, mit ihren Nachbarn des Bildes In verglichen wird und daß Regionen mit gleichen oder ähnlichen Regionen des Bildes In zusammengefaßt werden.

9. Verfahren nach einem der Ansprüche 1 bis 8, dadurch gekennzeichnet,
daß vor der Bildung neuer Regionen in dem Bild Iₙ₊₁ eine Kantendetektion anhand der Bildpunktwerte, die keiner gegenüber dem Bild Iₙ verschobenen Region angehören, vorgenommen wird und daß Bildpunkte, die eine Kante bilden, nach Bildung der neuen Regionen derjenigen neuen Region zugeschlagen werden, zu der sie aufgrund Ihrer Helligkeits- und/oder Farbwerte am besten passen.

10. Verfahren nach einem der Ansprüche 1 bis 9, dadurch gekennzeichnet,
daß eine Szenenwechselerkennung in der Weise vorgenommen wird, daß bei stark abweichendem Bildinhalt des Bildes Iₙ₊₁ vom Bild Iₙ keine Bewegungsschätzung vorgenommen wird und auschließlich neue Regionen gebildet werden.

11. Schaltungsanordnung zur Durchführung des Verfahrens nach einem der Ansprüche 1 bis 11, dadurch gekennzeichnet,
daß die Schaltungsanordnung Mittel (1) zur Bewegungsschätzung aufweist, der die Daten der Regionen eines Bildes Iₙ zugeführt werden und die anhand der Daten des nachfolgenden Bildes Iₙ₊₁ eine Bewegungsschätzung der gebildeten Regionen vornimmt.
